# EUROPÄISCHE PATENTSCHRIFT

(11) **EP 2 125 146 B1**
(45) Veröffentlichungstag und Bekanntmachung des Hinweises auf die Patenterteilung: **31.08.2016**
(21) Anmeldenummer: 08700279.6
(22) Anmeldetag: 17.01.2008
(51) Int. Cl.: B01D 33/50, B01D 33/073

(54) **RÜCKSPÜLFILTER**
BACKWASH FILTER
FILTRE À RÉTROLAVAGE

(30) Priorität: 18.01.2007 AT 942007
(43) Veröffentlichungstag der Anmeldung: 02.12.2009
(73) Patentinhaber: LENZING AKTIENGESELLSCHAFT, 4860 Lenzing (AT)
(72) Erfinder: SCHREMPF, Christoph, A-4701 Bad Schallerbach (AT); FUCHS, Helmut, A-4890 Frankenmarkt (AT); MÖDERL, Ulrich, A-5303 Thalgau (AT)
(74) Vertreter: Nemec, Harald
(86) Internationale Anmeldenummer: PCT/AT2008/000012
(87) Internationale Veröffentlichungsnummer: WO 2008/086554

(56) Entgegenhaltungen:
- WO-A-01/12293
- DE-A1- 10 252 785
- DE-U1- 20 014 299
- US-A- 5 268 095

## Beschreibung

Die Erfindung betrifft ein Rückspülfilter, insbesondere für hochviskose Medien, mit in einem Gehäuse vorgesehenen, einen Zylindermantel bildenden Filterkörper, wobei das Gehäuse und der Filterkörper um die Achse des Filterkörpers relativ zueinander drehbar sind, der Filterkörper einen Mediumzuströmraum von einem Mediumabströmraum trennt, und mit einem längs einer Erzeugenden des Filterkörpers verlaufenden Spülmittelabfuhrkanal, der relativ gegenüber dem Filterkörper bewegbar ist und der mit dem Filterkörper über dessen gesamte Länge und über dessen gesamten Umfang unter Ausbildung einer in den Spülmittelabfuhrkanal mündenden Strömung von Spülmittel in Strömungsverbindung bringbar ist.

Rückspülfilter sind in vielen Varianten bekannt, so z.B. aus der US 5 268 095, der DE 200 14 299 U1, der DE 198 03 083 A1, der DE 195 23 462 A1 oder der AT 004594 U1. Alle diese bekannten Rückspülfilter weisen ein Gehäuse auf, in dem ein zylindermantelförmiger Filterkörper vorgesehen ist, welcher Filterkörper einen Mediumzuströmraum von einem Mediumabströmraum trennt. Das zu filternde Medium strömt somit infolge eines Druckunterschiedes durch den Filterkörper und wird hierbei von Verunreinigungen gereinigt. Die Verunreinigungen setzen sich an der Seite des Mediumzuströmraumes am Filterkörper bzw. Filtermaterial ab und müssen nach einer gewissen Zeit vom Filterkörper entfernt werden, was durch eine Rückspülung bewirkt wird. Diese Rückspülung erfolgt gemäß Dokument DE 195 23 462 A1 über einen im Mediumabströmraum vorgesehenen Spülkanal, der sich entlang des Filterkörpers erstreckt und relativ um dessen Umfang bewegbar ist, wodurch der sich um seine Längsachse drehende Filterkörper nacheinander entlang seiner Erzeugenden über deren gesamte Länge gereinigt wird, indem gereinigtes, d.h. bereits gefiltertes, Medium über den Filterkörper in zur Strömung des ungereinigten Mediums entgegengesetzter Richtung in den Spülmittelabfuhrkanal strömt.
Gemäß der DE 198 03 083 A1 befindet sich im Mediumabströmraum ein Spülmittelzufuhrkanal, der sich entlang einer Erzeugenden des Filterkörpers erstreckt und Spülmittel zu einem vis-a-vis angeordneten Spülmittelabfuhrkanal über den Filterkörper leitet, wobei der Filterkörper längs einer Erzeugenden über seine gesamte Länge gereinigt wird. Durch eine Relativbewegung zwischen Spülmittelzufuhrkanal und Filterkörper bzw. Filterkörper und Spülmittelabfuhrkanal wird der Filterkörper über seinen gesamten Umfang gereinigt.

Rückspülfilter dieser Art weisen den Nachteil auf, dass relativ hohe Mengen an Rückspülflüssigkeit benötigt werden. Da der Filterkörper über seine gesamte Länge in einem gereinigt wird, wie dies in der DE 195 23 462 A1 und der DE 198 03 083 A1 gezeigt ist, sinkt der Wirkungsgrad des Rückspülfilters erheblich. Die bekannten Rückspülfilter sind aus diesem Grund auch nur für niedrigviskose Medien geeignet. Weiters ist für die Reinigung des Filterkörpers ein relativ hoher Druckunterschied nötig, der das Filtermaterial, das vom Filterkörper gestützt wird, stark belastet.

Die Erfindung bezweckt die Vermeidung der oben geschilderten Nachteile und Schwierigkeiten und stellt sich die Aufgabe, ein Rückspülfilter der eingangs beschriebenen Art zu schaffen, welches mit einem geringen Spülvolumen das Auslangen findet. Zudem soll mit möglichst geringem maschinenbaulichen Aufwand eine effizientere Spülung des Filtermaterials möglich sein, sodass auch besonders feine Filtermaterialien für Rückspülfilter einsetzbar sind. Diese besonders gute Spülung soll nicht durch einen erhöhten Überdruck bewirkt werden, was bei Rückspülfiltern gemäß dem Stand der Technik notwendig wäre, sondern auch bei einem geringen Druckunterschied am Filterkörper zwischen der Spülmittelzuströmung und der Spülmittelabströmung bewirkt werden. Zudem soll es möglich sein, durch den geringen Druckunterschied größere freie Filtermaterialflächen, die nicht von Stützflächen des Filterkörpers bedeckt sind, zur Verfügung zu stellen, sodass das Rückspülfilter eine wesentlich größere Durchsatzleistung ermöglicht.

Diese Aufgabe wird erfindungsgemäß dadurch gelöst, dass die Strömungsverbindung stets nur über einen Teilbereich der Längserstreckung einer Erzeugenden des Filterkörpers erfolgt.

Gemäß einer bevorzugten Ausführungsform ist der Mediumzuströmraum zwischen dem Gehäuse und dem Filterkörper und der Mediumabströmraum im Inneren des Filterkörpers ausgebildet, wobei der Spülmittelabfuhrkanal außerhalb des Filterkörpers vorgesehen ist.

Vorzugsweise ist der Spülmittelabfuhrkanal von einem um seine Längsachse drehbar gelagerten Rohr gebildet, das mit einem sich über die Wand des Rohres schraubenlinienförmig erstreckenden und den Innenraum des Rohres mit dessen Außenraum verbindenden Schlitz versehen ist, wobei die Außenoberfläche des Rohres den Filterkörper über dessen gesamte Längserstreckung kontaktiert. Hierbei lässt sich das gereinigte Medium als Rückspülflüssigkeit einsetzen, wobei nur eine geringe Menge desselben bei hoher Rückspülwirkung benötigt wird, da dieses Medium nur über eine sehr geringe Länge einer Erzeugenden des Filterkörpers in den Spülmittelabfuhrkanal gelangt.

Derselbe Vorteil lässt sich gemäß einer anderen Ausführungsform dadurch erzielen, dass der Spülmittelabfuhrkanal von einem entlang seiner Längsachse verschiebbaren Rohr gebildet ist, das eine radial gerichtete, seinen Innenraum mit seinem Außenraum verbindende Spülöffnung aufweist, welche Spülöffnung eine Erstreckung längs der Längsachse des Rohres aufweist, die geringer ist als die Längserstreckung des Filterkörpers, wobei vorzugsweise die Außenoberfläche des Rohres den Filterkörper über dessen gesamte Längserstreckung kontaktiert und die Spülöffnung gegen den Filterkörper gerichtet ist.

Wird es z.B. gewünscht, für die beiden oben beschriebenen Varianten eine andere Spülmittelflüssigkeit als das gereinigte Medium zu verwenden, ist vorteilhaft im Inneren des Filterkörpers ein Spülmittelzufuhrkanal vis-a-vis zum außerhalb des Filterkörpers vorgesehenen Spülmittelabfuhrkanal vorgesehen, wobei der Spülmittelzufuhrkanal einen zum Spülmittelabfuhrkanal gerichteten Längsschlitz, der sich über die gesamte Längserstreckung des Filterkörpers erstreckt, aufweist. Hierdurch lässt sich auch ein Spülmitteldruck unabhängig vom Druck des gereinigten Mediums einstellen.

Gemäß einer anderen vorteilhaften Ausführungsform weist der Spülmittelabfuhrkanal einen Längsschlitz, der sich über die gesamte Längserstreckung des Filterkörpers erstreckt, auf und es ist ein vis-a-vis zum Spülmittelabfuhrkanal angeordneter Spülmittelzufuhrkanal vorgesehen, der von einem um seine Längsachse drehbar gelagerten Rohr gebildet ist, das mit einem sich über die Wand des Rohres schraubenlinienförmig erstreckenden und den Innenraum des Rohres mit dessen Außenraum verbindenden Schlitz versehen ist, wobei die Außenoberfläche des Rohres den Filterkörper über dessen gesamte Längserstreckung kontaktiert. Auch hierbei ist der Spülmitteldruck unabhängig vom Druck des gefilterten Mediums und es kann auch ein Spülmittel anderer Art als das gefilterte Medium eingesetzt werden.

Diese Vorteile ergeben sich auch bei der zweckmäßigen Ausführungsform, die dadurch gekennzeichnet ist, dass der Spülmittelabfuhrkanal mit einem sich über die gesamte Längserstreckung des Filterkörpers erstreckenden Schlitz versehen ist und vis-a-vis zum Spülmittelabfuhrkanal ein Spülmittelzufuhrkanal vorgesehen ist, der von einem entlang seiner Längsachse verschiebbar gelagerten Rohr gebildet ist, das eine radial zum Schlitz des Spülmittelabfuhrkanals gerichtete Spülöffnung aufweist und das mit dieser Spülöffnung von einem Ende des Filterkörpers zum anderen Ende des Filterkörpers und darüber hinaus verschiebbar ist, wobei die Spülöffnung in Richtung der Längsachse des Rohres eine Erstreckung aufweist, die kürzer ist als die Längserstreckung des Filterkörpers.

Zur Vermeidung von Verlusten ist der Spülmittelabfuhrkanal gegenüber dem Filterkörper beidseitig der Erzeugenden, entlang der der Spülmittelabfuhrkanal den Filterkörper kontaktiert, mittels Dichtungen gedichtet

Der Filterkörper weist eine Druckplatte und eine Stützplatte sowie ein dazwischen angeordnetes Filtermaterial auf

Der Filterkörper ist gegenüber dem ortsfesten Gehäuse drehbar gelagert, wobei ein Zulauf für zu filterndes Medium im Gehäuse in Drehrichtung des Filterkörpers unmittelbar benachbart zum Spülmittelabfuhrkanal vorgesehen ist. Hierdurch herrscht an dem Teil des Filterkörpers, der schon am meisten belastet bzw. mit Verunreinigungen versehen ist, der höchste Druck bzw. gelangt das verunreinigte Medium in den ersten direkten Kontakt mit dem Filterkörper, wogegen das Medium durch Umströmen des Filterkörpers mit geringerem Druck zu immer weniger mit Verunreinigungen belasteten Filterflächen gelangt.

Es hat sich von Vorteil gezeigt, wenn der schraubenlinienförmige Schlitz doppelgängig ist.

Für hochviskose Medien erstreckt sich zweckmäßig der Teilbereich der Strömungsverbindung über max. 20 %, vorzugsweise max. 5 %, der Längserstreckung des Filterkörpers.

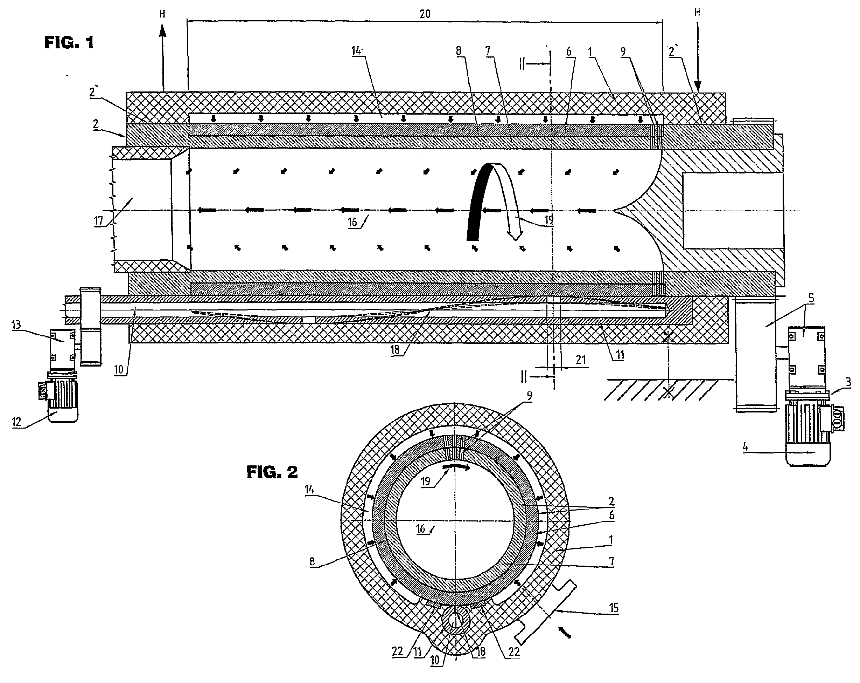

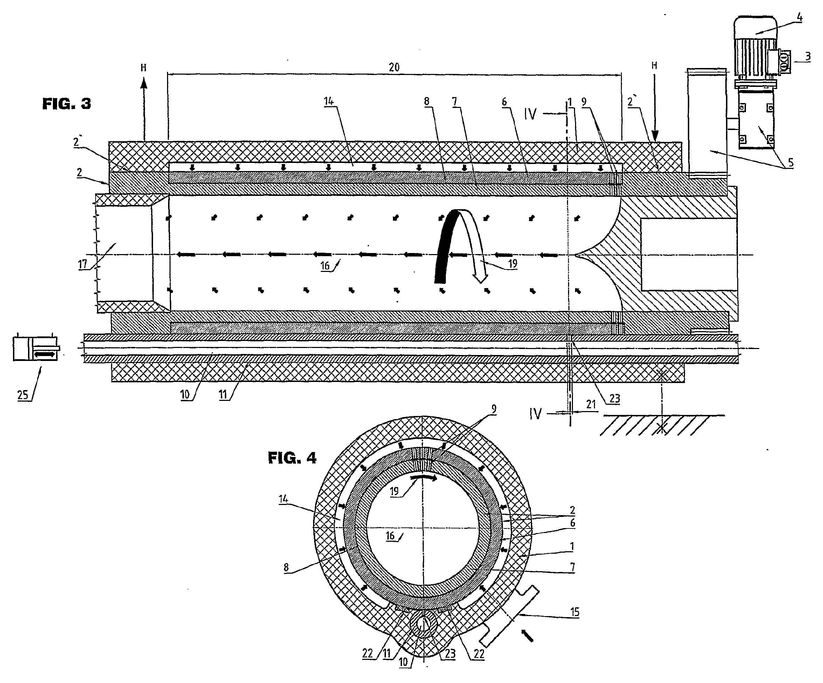

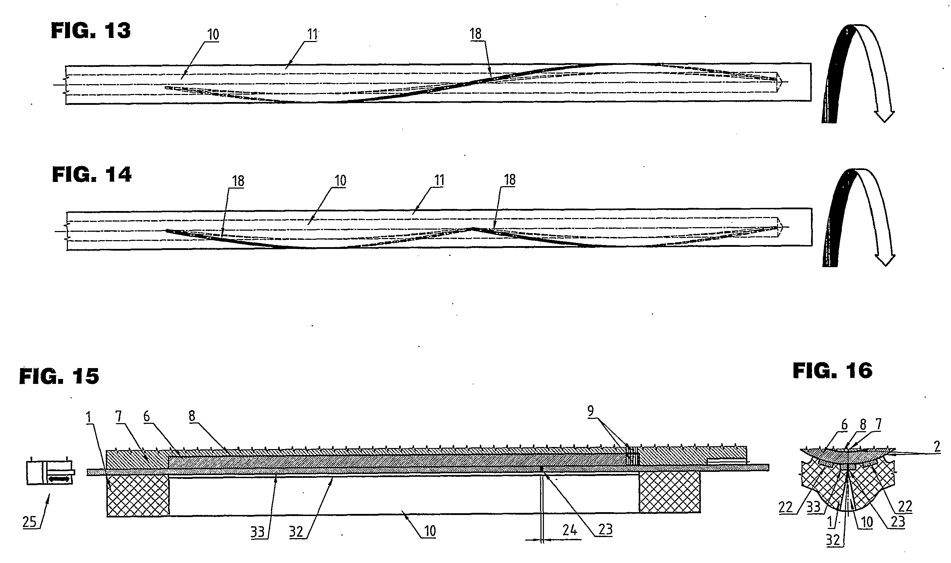

Die Erfindung ist nachfolgend anhand mehrerer in der Zeichnung dargestellter Ausführungsbeispiele näher beschrieben, wobei Fig. 1 einen Längsschnitt durch ein Rückspülfilter und Fig. 2 einen Querschnitt durch dasselbe entlang der Linie II-II der Fig. 1 gemäß einer ersten Ausführungsform eines Rückspülfilters veranschaulichen. Die Fig. 3 und 4 bzw. 5 und 6 sowie 7 und 8 und auch 9 und 10 und 11 und 12 zeigen jeweils in zu den Fig. 1 und 2 analogen Darstellungen weitere Ausführungsformen. Die Fig. 13 und 14 zeigen Spülmittelzufuhrkanäle bzw. Spülmittelabfuhrkanäle im ausgebauten Zustand in Ansicht. Die Fig. 15 und 16 veranschaulichen eine Variante im Längsschnitt (Fig. 15) und Querschnitt (Fig. 16).

Gemäß der in Fig. 1 dargestellten Ausführungsform eines Rückspülfilters ist in einem zylindermantelförmig gestalteten Gehäuse 1 ein ebenfalls zylindermantelförmiger Filterkörper 2 drehbar gelagert, wobei das Gehäuse 1 ortsfest angeordnet ist. Der Drehantrieb 3 für den Filterkörper 2 ist von einem Elektromotor 4 verwirklicht, der über ein Zahnradgetriebe 5 den Filterkörper 2 antreibt. Das Rückspülfilter ist mit einer Entlüftung versehen und weist eine Steuerungsvorrichtung zur Steuerung der Drücke auf. Das Gehäuse 1 ist beheizbar; die Heizleitungen sind mit H bezeichnet.

Der Filterkörper 2 selbst weist eine sich über den gesamten Umfang außen erstreckende Druckplatte 6, gegebenenfalls aus Segmenten zusammengesetzt, und eine innen liegende sich ebenfalls über den gesamten Umfang erstreckende Stützplatte 7 auf, zwischen denen das Filtermaterial 8 eingesetzt ist. Sowohl die Druckplatte als auch die Stützplatte sind mit radial gerichteten Öffnungen 9 versehen, sodass ein Medium durch die Öffnungen 9 unter Passieren des Filtermaterials 8 strömen kann. Diese Öffnungen 9 sind nur an einem Ende des Filterkörpers 2 veranschaulicht, sind jedoch über seine gesamte Längserstreckung 20 vorgesehen. Unter Längserstreckung 20 des Filterkörpers 2 wird jene Länge verstanden, über die sich das Filtermaterial 8 erstreckt. Diverse Stützflächen 2' zur Lagerung des Filterkörpers werden hierbei nicht berücksichtigt.

Ein Spülmittelabfuhrkanal 10 erstreckt sich längs einer Erzeugenden des Filterkörpers 2. Der Spülmittelabfuhrkanal 10 ist von einem drehbar gelagerten Rohr 11 gebildet, das ebenfalls von einem Elektromotor 12 über ein Getriebe 13 antreibbar ist und den Filterkörper 2 außen tangentialartig berührt, also an der Außenseite der Druckplatte 6. Dieses Rohr 11 erstreckt sich über die gesamte Längserstreckung 20 des Filterkörpers 2 und ist im Gehäuse 1 drehbar gelagert.

Zwischen dem Gehäuse 1 und dem Filterkörper 2 ist ein Mediumzuströmraum 14 gebildet, welcher über einen Zulauf 15 mit frischem, noch zu reinigendem Medium versorgt wird. Der Innenraum 16 des Filterkörpers 2 bildet den Mediumabströmraum für das gefilterte Medium, welches gefilterte Medium über einen Abströmkanal 17 abströmt.

Das Rohr 11 weist einen sich über seine gesamte Länge erstreckenden Schlitz 18 auf, der den Innenraum des Rohres 11, also den Spülmittelabfuhrkanal 10, mit dessen Außenraum verbindet und der sich schraubenlinienförmig über die Wand des Rohres 11 erstreckt.

Die Funktion des Rückspülfilters ist folgende:
Das zu filternde Medium gelangt also über den Zulauf 15 in den Mediumzuströmraum 14, und zwar an einer Stelle, die in Drehrichtung des Filterkörpers 2, die durch den Pfeil 19 angedeutet ist, knapp benachbart zur Lage des Spülmittelablaufkanals 10 vorgesehen ist. Das zu filternde Medium verteilt sich nunmehr gleichmäßig über den Umfang des Filterkörpers 2, durchströmt dessen Öffnungen 9 und gelangt so gefiltert in den zentralen Innenraum des Filterkörpers 2, der den Mediumabströmraum 16 bildet.
Durch den tangentialartigen Kontakt des Rohres 11 des Spülmittelabfuhrkanals 10 mit der Außenwand des Filterkörpers 2 gelangt der Spülmittelabfuhrkanal 10 in Strömungsverbindung mit dem Filterkörper 2 und damit auch in Strömungsverbindung mit dem Mediumabströmraum 16, wobei jedoch - und dies ist wesentlich - diese Strömungsverbindung sich nur über eine sehr kurze Längserstreckung 20 des Filterkörpers 2 erstreckt, zumal der Schlitz 18, der sich schraubenförmig um das Rohr 11 erstreckt, stets nur mit einem sehr kleinen Teil 21 seiner Längserstreckung zum Filterkörper 2 ausgerichtet ist. Durch kontinuierliches oder auch diskontinuierliches Drehen des Rohres 11 gelangen nach und nach sämtliche an einer Erzeugenden liegenden Öffnungen 9 des Filterkörpers 2 mit dem Spülmittelabfuhrkanal 10 in Strömungsverbindung, sodass eine Reinigung sämtlicher Öffnungen 9 durch Rückspülen mit bereits gereinigtem Medium bewirkt wird. Hierdurch gelingt es auch für hochviskose Medien, mit einem geringen Druckunterschied beim Rückspülen das Auslangen zu finden, denn dieser Druckunterschied konzentriert sich auf nur eine kleine Fläche des Filtermaterials 8.

Der Filterkörper 2 wird ebenfalls kontinuierlich oder diskontinuierlich gedreht. Die diskontinuierliche Drehung kann durch den Druckverlauf gesteuert werden, sodass ein möglichst druckkonstanter Betrieb erfolgt. Die Drehung des Filterkörpers 2 kann schrittweise erfolgen (z.B. jeweils um 5 °).

Zur Vermeidung von Verlusten ist der Spülmittelabfuhrkanal 10, also das Rohr 11, im Gehäuse 1 eingebettet, wobei das Gehäuse 1 unmittelbar benachbart zum Spülmittelabfuhrkanal 10 mit gegen den Filterkörper 2 gerichteten und sich längs der gesamten Länge des Gehäuses 1 beidseitig des Spülmittelabfuhrkanals 10 erstreckenden Dichtungen 22 versehen ist.

Der Spülmittelablaufkanal 10, d.h. das Rohr 11, kann mit einem sich eingängig schraubenförmig entlang des Rohres 11 versehenen Schlitz 18 oder auch einem zwei- oder mehrgängig entlang des Rohres 11 schraubenförmig erstreckenden Schlitz 18 versehen sein. Ein zweigängiger Schlitz 18 ist in Fig. 14 veranschaulicht. Fig. 13 zeigt analog zur Darstellung in Fig. 1 einen eingängigen Schlitz 18.

Gemäß der in den Fig. 3 und 4 dargestellten Ausführungsform ist der Spülmittelabfuhrkanal 10, d.h. das Rohr 11, im Gehäuse 1 nicht drehbar gelagert, sondern längs verschiebbar und weist eine radial gegen den Filterkörper 2 gerichtete Spülöffnung 23 auf. Diese Spülöffnung 23 weist eine Längserstreckung 21, also eine Erstreckung parallel zu einer Erzeugenden des Filterkörpers 2, auf, die wesentlich geringer ist als die Längserstreckung 20 des Filterkörpers 2. Eine Verschiebeeinrichtung 25 für den Spülmittelabfuhrkanal 10 ist in Fig. 3 schematisch angedeutet. Die Spülöffnung 23 lässt sich von einem Ende des Filterkörpers 2 bis zum anderen Ende des Filterkörpers 2 über dessen Längserstreckung 20 und darüber hinaus kontinuierlich oder diskontinuierlich verschieben, sodass wiederum sämtliche Öffnungen 9 einer Erzeugenden des Filterkörpers 2 nach und nach gereinigt werden.

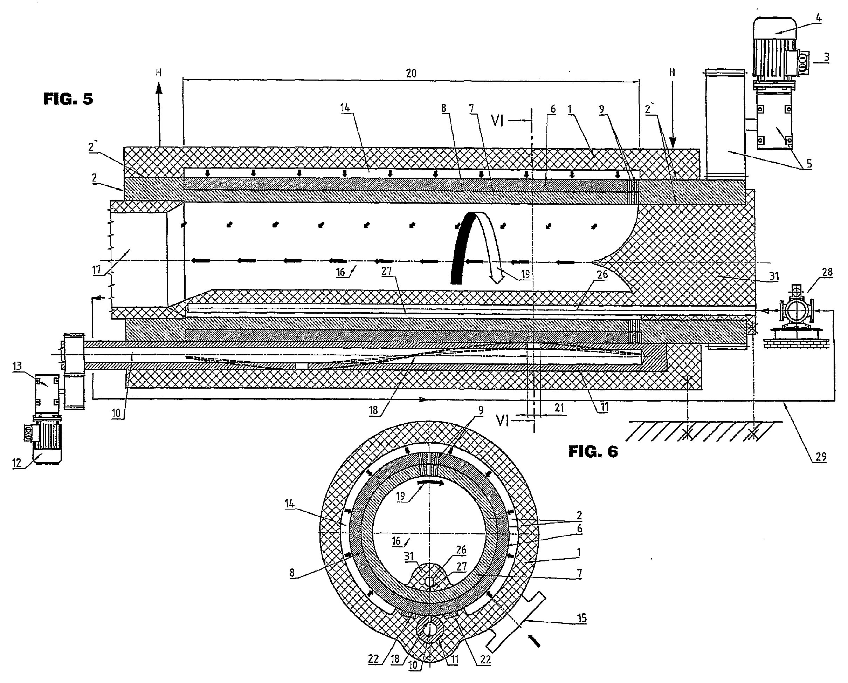

Die in den Fig. 5 und 6 dargestellte Variante eines Rückspülfilters entspricht im wesentlichen der in den Fig. 1 und 2 dargestellten Ausführungsform, mit Ausnahme eines Spülmittelzufuhrkanals 26, der im Inneren des Filterkörpers 2, d.h. im Mediumabströmraum 16, vorgesehen ist und einen Längsschlitz 27 aufweist, der sich über die gesamte Längserstreckung 20 des Filterkörpers 2 erstreckt. Der Spülmittelzufuhrkanal 26 ist ortsfest vorgesehen und daher in einem ortsfesten Einsatzkörper 31, gegenüber dem der Filterkörper drehbar ist, angeordnet. Hierdurch gelingt es, ein Spülmittel mit einem vom Druck des gereinigten Mediums unabhängigen Druck zur Reinigung des Filtermaterials 8 heranzuziehen. Eine Druckerhöhungspumpe 28, die in einer das gereinigte Medium dem Spülmittelzufuhrkanal 26 zuleitenden Leitung 29 vorgesehen ist, ist in Fig. 5 schematisch veranschaulicht. Anstelle der Druckerhöhungspumpe 28 kann auch ein Kolbendrucksystem eingesetzt werden.

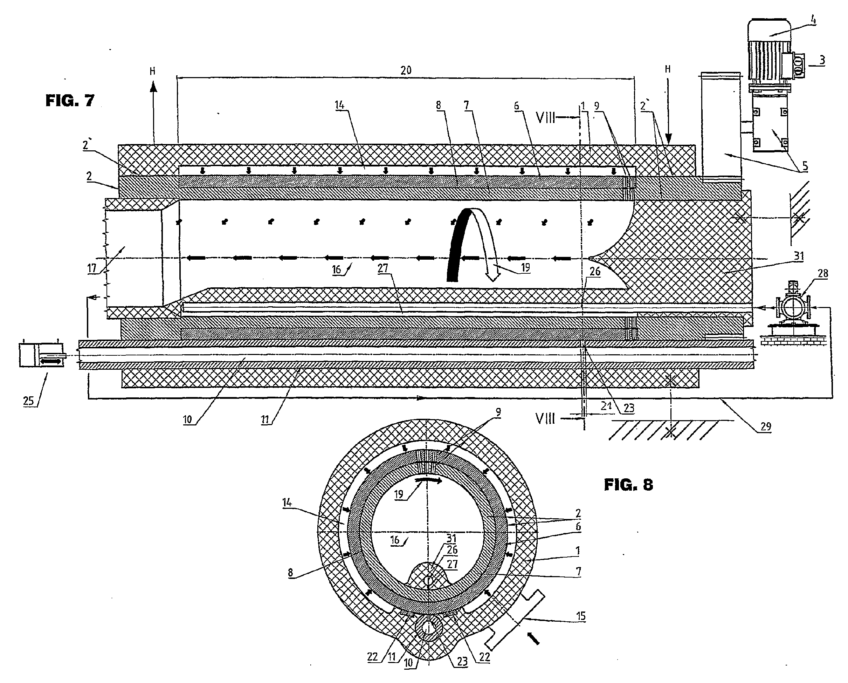

Die Fig. 7 und 8 zeigen eine Rückspülfiltervariante, gemäß der ein Spülmittelzufuhrkanal 26, wie er in den Fig. 5 und 6 veranschaulicht ist, vorgesehen ist, jedoch der Spülmittelabfuhrkanal 10 analog zu der in den Fig. 3 und 4 gezeigten Variante längs verschiebbar vorgesehen ist.

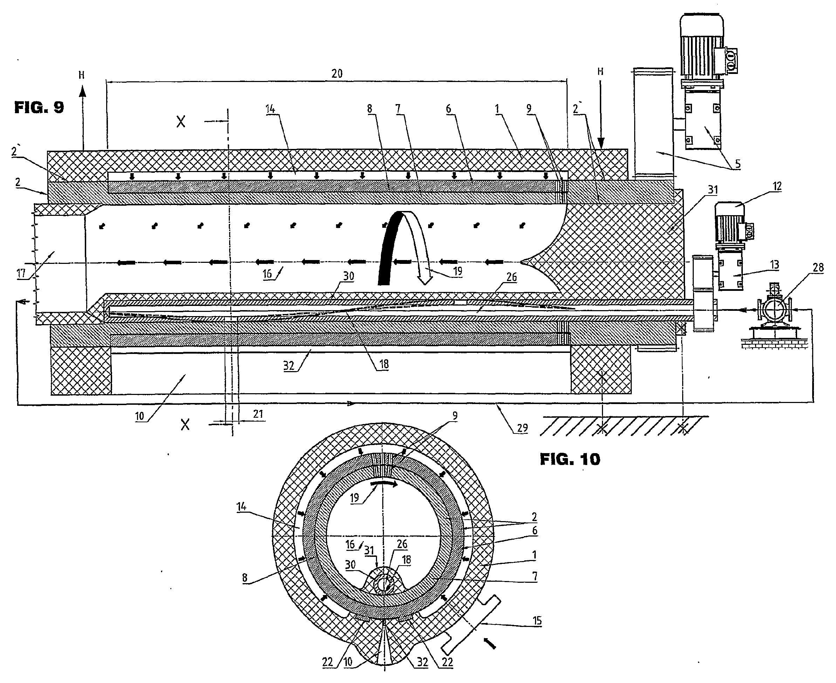

Die Fig. 9 und 10 zeigen eine Variante, gemäß der der Spülmittelabfuhrkanal 10 einen sich über die gesamte Länge des Filterkörpers 2 erstreckenden geradlinigen Schlitz 32 aufweist, der ortsfest und direkt gegen den Filterkörper 2 ausgerichtet ist. Ein Spülmittelzufuhrkanal 26 ist hier von einem drehbaren Rohr 30 gebildet, das analog zu dem Spülmittelabfuhrkanal 10 der in den Fig. 1 und 2 dargestellten Variante, d.h. heißt dessen Rohr 11, gestaltet ist. Es weist einen sich schraubenlinienförmig über dessen Länge erstreckenden Schlitz 18 (ein-, zwei- oder mehrgängig) auf, wodurch der Filterkörper 2, d.h. dessen Öffnungen 9, nur über eine kurze Längserstreckung 21 mit Spülmittel beaufschlagt werden. Durch kontinuierliches oder diskontinuierliches Drehen des Rohres 30 gelingt es wiederum, den Filterkörper 2 über die gesamte Längserstreckung 20 einer seiner Erzeugenden zu reinigen.

Eine Variante des Rückspülfilters mit einem Rohr 30, das analog zu dem Rohr 11 der in den Fig. 3 und 4 dargestellten Variante gestaltet ist, ist in den Fig. 11 und 12 veranschaulicht. Die Spülöffnung 23, die wiederum nur eine geringe Längserstreckung 21 im Vergleich zur Längserstreckung 20 des Filterkörpers 2 aufweist, ist über die gesamte Längserstreckung 20 des Filterkörpers 2 verschiebbar, sodass wiederum der Filterkörper 2 an einer seiner Erzeugenden über deren gesamte Längserstreckung 20 gereinigt werden kann. Der Spülmittelabfuhrkanal 10 weist auch hier einen sich über die gesamte Längserstreckung 20 des Filterkörpers 2 erstreckenden Schlitz 32 auf.

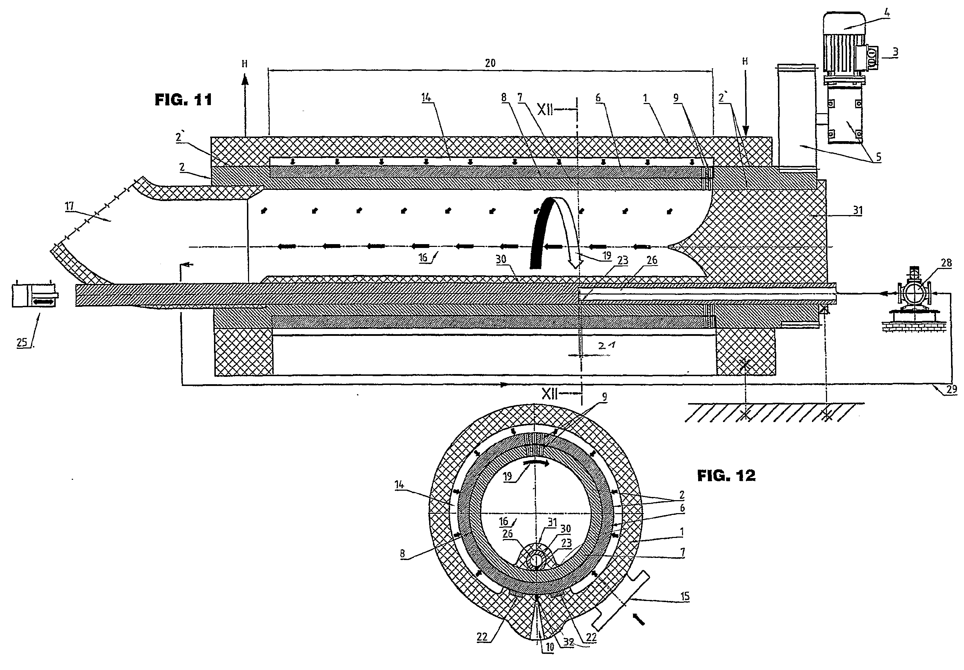

Gemäß den in den Fig. 7 bis 12 dargestellten Ausführungsformen sind die Einsatzkörper 31 ebenfalls ortsfest abgestützt.

Gemäß der in den Fig. 15 und 16 dargestellten Variante ist der Spülmittelabfuhrkanal 10 ausgebildet wie in den in den Fig. 9 bis 12 dargestellten Ausführungsformen, also als ortsfester geradliniger Schlitz 32. Eine Strömungsverbindung für das Spülmittel, die sich nur über einen Teilbereich der Lösungserstreckung 20 erstreckt, wird mittels eines Schiebers 33, der den Schlitz 32 abdeckt, jedoch eine Spülöffnung 23, die über die gesamte Längserstreckung 20 bewegbar ist, aufweist, erzielt.

Die Erfindung ist insbesondere für die Lyocelltechnik einsetzbar. Das Rückspülfilter kann an geeigneten Stellen Leckageöffnungen analog zur EP 0 781 356 A1 aufweisen.

## Patentansprüche

1. Rückspülfilter, insbesondere für hochviskose Medien, mit in einem Gehäuse (1) vorgesehenen, einen Zylindermantel bildenden Filterkörper (2), wobei das Gehäuse (1) und der Filterkörper (2) um die Achse des Filterkörpers (2) relativ zueinander drehbar sind, der Filterkörper (2) einen Mediumzuströmraum (14) von einem Mediumabströmraum (16) trennt, und mit einem längs einer Erzeugenden des Filterkörpers (2) verlaufenden Spülmittelabfuhrkanal (10), der relativ gegenüber dem Filterkörper (2) bewegbar ist und der mit dem Filterkörper (2) über dessen gesamte Länge und über dessen gesamten Umfang unter Ausbildung einer in den Spülmittelabfuhrkanal (10) mündenden Strömung von Spülmittel in Strömungsverbindung bringbar ist, wobei die Strömungsverbindung stets nur über einen Teilbereich der Längserstreckung (20) einer Erzeugenden des Filterkörpers (2) erfolgt, **dadurch gekennzeichnet, dass** der Spülmittelabfuhrkanal (10) gegenüber dem Filterkörper (2) beidseitig der Erzeugenden, entlang der der Spülmittelabfuhrkanal (10) den Filterkörper (2) kontaktiert, mittels Dichtungen (22) gedichtet ist, dass der Filterkörper (2) eine Druckplatte (6) und eine Stützplatte (7) sowie ein dazwischen angeordnetes Filtermaterial (8) aufweist und dass der Filterkörper (2) gegenüber dem ortsfesten Gehäuse (1) drehbar gelagert ist, wobei ein Zulauf (15) für zu filterndes Medium im Gehäuse (1) in Drehrichtung (19) des Filterkörpers (2) unmittelbar benachbart zum Spülmittelabfuhrkanal (10) vorgesehen ist.

2. Rückspülfilter nach Anspruch 1, **dadurch gekennzeichnet, dass** der Mediumzuströmraum (14) zwischen dem Gehäuse (1) und dem Filterkörper (2) und der Mediumabströmraum (16) im Inneren des Filterkörpers (2) ausgebildet ist, wobei der Spülmittelabfuhrkanal (10) außerhalb des Filterkörpers (2) vorgesehen ist.

3. Rückspülfilter nach Anspruch 1 oder 2, **dadurch gekennzeichnet, dass** der Spülmittelabfuhrkanal (10) von einem um seine Längsachse drehbar gelagerten Rohr (11) gebildet ist, das mit einem sich über die Wand des Rohres (11) schraubenlinienförmig erstreckenden und den Innenraum des Rohres (11) mit dessen Außenraum verbindenden Schlitz (18) versehen ist, wobei die Außenoberfläche des Rohres (11) den Filterkörper (2) über dessen gesamte Längserstreckung (20) kontaktiert.

4. Rückspülfilter nach Anspruch 1 oder 2, **dadurch gekennzeichnet, dass** der Spülmittelabfuhrkanal (10) von einem entlang seiner Längsachse verschiebbaren Rohr (11) gebildet ist, das eine radial gerichtete, seinen Innenraum mit seinem Außenraum verbindende Spülöffnung (23) aufweist, welche Spülöffnung (23) eine Erstreckung (21) längs der Längsachse des Rohres (11) aufweist, die geringer ist als die Längserstreckung (20) des Filterkörpers (2), wobei vorzugsweise die Außenoberfläche des Rohres (11) den Filterkörper (2) über dessen gesamte Längserstreckung (20) kontaktiert und die Spülöffnung (23) gegen den Filterkörper (2) gerichtet ist.

5. Rückspülfilter nach einem der Ansprüche 3 oder 4, **dadurch gekennzeichnet, dass** im Inneren des Filterkörpers (2) ein Spülmittelzufuhrkanal (26) vis-a-vis zum außerhalb des Filterkörpers (2) vorgesehenen Spülmittelabfuhrkanal (10) vorgesehen ist, wobei der Spülmittelzufuhrkanal (26) einen zum Spülmittelabfuhrkanal (10) gerichteten Längsschlitz (27), der sich über die gesamte Längserstreckung (20) des Filterkörpers (2) erstreckt, aufweist.

6. Rückspülfilter nach Anspruch 1 oder 2, **dadurch gekennzeichnet, dass** der Spülmittelabfuhrkanal (10) einen Längsschlitz (32), der sich über die gesamte Längserstreckung (20) des Filterkörpers (2) erstreckt, aufweist, und dass ein vis-a-vis zum Spülmittelabfuhrkanal (10) angeordneter Spülmittelzufuhrkanal (26) vorgesehen ist, der von einem um seine Längsachse drehbar gelagerten Rohr (30) gebildet ist, das mit einem sich über die Wand des Rohres (30) schraubenlinienförmig erstreckenden und den Innenraum des Rohres (30) mit dessen Außenraum verbindenden Schlitz (18) versehen ist, wobei die Außenoberfläche des Rohres (30) den Filterkörper (2) über dessen gesamte Längserstreckung (20) kontaktiert.

7. Rückspülfilter nach Anspruch 1 oder 2, **dadurch gekennzeichnet, dass** der Spülmittelabfuhrkanal (10) mit einem sich über die gesamte Längserstreckung (20) des Filterkörpers (2) erstreckenden Schlitz (32) versehen ist und vis-a-vis zum Spülmittelabfuhrkanal (10) ein Spülmittelzufuhrkanal (26) vorgesehen ist, der von einem entlang seiner Längsachse verschiebbar gelagerten Rohr (11) gebildet ist, das eine radial zum Schlitz (32) des Spülmittelabfuhrkanals (10) gerichtete Spülöffnung (23) aufweist und das mit dieser Spülöffnung (23) von einem Ende des Filterkörpers (2) zum anderen Ende des Filterkörpers (2) und darüber hinaus verschiebbar ist, wobei die Spülöffnung (23) in Richtung der Längsachse des Rohres (11) eine Erstreckung (21) aufweist, die kürzer ist als die Längserstreckung (20) des Filterkörpers (2).

8. Rückspülfilter nach einem der Ansprüche 3 bis 7, **dadurch gekennzeichnet, dass** der schraubenlinienförmige Schlitz (18) doppelgängig ist.

9. Rückspülfilter nach einem der Ansprüche 1 bis 8, **dadurch gekennzeichnet, dass** der Teilbereich der Strömungsverbindung sich über max. 20 %, vorzugsweise max. 5 % der Längserstreckung (20) des Filterkörpers (2) erstreckt.

## Claims

1. A backwash filter, in particular for highly viscous media, comprising a filter body (2) provided in a casing (1) and forming a cylinder jacket, wherein the casing (1) and the filter body (2) are rotatable about the axis of the filter body (2) relative to one another and wherein the filter body (2) separates a medium inflow space (14) from a medium outflow space (16), and comprising a flushing agent discharge channel (10) extending along a generatrix of the filter body (2), which flushing agent discharge channel (10) is movable relative to the filter body (2) and can be brought into flow connection with the filter body (2) across the entire length thereof and across the entire circumference thereof, with the formation of a stream of flushing agent flowing into the flushing agent discharge channel (10), wherein the flow connection always occurs only across a portion of the longitudinal extension (20) of a generatrix of the filter body (2), **characterized in that** the flushing agent discharge channel (10) is sealed off with gaskets (22) against the filter body (2) on both sides of the generatrix along which the flushing agent discharge channel (10) contacts the filter body (2), the filter body (2) has a pressure plate (6) and a support plate (7) as well as a filter material (8) arranged therebetween, and that the filter body (2) is rotatably mounted relative to the stationary casing (1), wherein a feed inlet (15) for medium to be filtered is provided in the casing (1) in the direction of rotation (19) of the filter body (2), immediately adjacent to the flushing agent discharge channel (10).

2. A backwash filter according to claim 1, **characterized in that** the medium inflow space (14) is formed between the casing (1) and the filter body (2), and the medium outflow space (16) is formed in the interior of the filter body (2), with the flushing agent discharge channel (10) provided outside of the filter body (2).

3. A backwash filter according to claim 1 or 2, **characterized in that** the flushing agent discharge channel (10) is formed by a pipe (11) mounted rotatably about its longitudinal axis, which pipe (11) is provided with a slot (18) extending in the shape of a helix across the wall of the pipe (11) and connecting the pipe's (11) interior to the exterior thereof, with the outer surface of the pipe (11) contacting the filter body (2) across the entire longitudinal extension (20) thereof.

4. A backwash filter according to claim 1 or 2, **characterized in that** the flushing agent discharge channel (10) is formed by a pipe (11) displaceable along its longitudinal axis, which pipe (11) has a radially oriented flushing opening (23) connecting its interior to its exterior, which flushing opening (23) has an extension (24) along the longitudinal axis of the pipe (11) which is smaller than the longitudinal extension (20) of the filter body (2), with the outer surface of the pipe (11) preferably contacting the filter body (2) across the entire longitudinal extension (20) thereof and with the flushing opening (23) being oriented toward the filter body (2).

5. A backwash filter according to any of claims 3 or 4, **characterized in that** a flushing agent feed channel (26) is provided in the interior of the filter body (2) vis-à-vis the flushing agent discharge channel (10) provided outside of the filter body (2), with the flushing agent feed channel (26) having a longitudinal slot (27) oriented toward the flushing agent discharge channel (10) and extending across the entire longitudinal extension (20) of the filter body (2).

6. A backwash filter according to claim 1 or 2, **characterized in that** the flushing agent discharge channel (10) has a longitudinal slot (32) extending across the entire longitudinal extension (20) of the filter body (2) and that a flushing agent feed channel (26) arranged vis-à-vis the flushing agent discharge channel (10) is provided, which flushing agent feed channel (26) is formed by a pipe (30) mounted rotatably about its longitudinal axis and provided with a slot (18) extending in the shape of a helix across the wall of the pipe (30) and connecting the pipe's (30) interior to the exterior thereof, with the outer surface of the pipe (30) contacting the filter body (2) across the entire longitudinal extension (20) thereof.

7. A backwash filter according to claim 1 or 2, **characterized in that** the flushing agent discharge channel (10) is provided with a slot (32) extending across the entire longitudinal extension (20) of the filter body (2) and that a flushing agent feed channel (26) is provided vis-à-vis the flushing agent discharge channel (10), which flushing agent feed channel (26) is formed by a pipe (11) mounted displaceably along its longitudinal axis, which pipe (11) has a flushing opening (23) radially oriented toward the slot (32) of the flushing agent discharge channel (10) and is displaceable with said flushing opening (23) from one end of the filter body (2) to the other end of the filter body (2) and beyond, with the flushing opening (23) having an extension (24) in the direction of the longitudinal axis of the pipe (11) which is shorter than the longitudinal extension (20) of the filter body (2).

8. A backwash filter according to any of claims 3 to 7, **characterized in that** the helical slot (18) is two-start.

9. A backwash filter according to any of claims 1 to 8, **characterized in that** the portion of the flow connection extends across at most 20%, preferably at most 5%, of the longitudinal extension (20) of the filter body (2).

## Revendications

1. Filtre à rétrolavage, destiné en particulier à des fluides hautement visqueux, avec un corps de filtre (2) prévu dans un boîtier (1) et formant une enveloppe cylindrique, le boîtier (1) et le corps de filtre (2) étant rotatifs l'un par rapport à l'autre autour de l'axe du corps de filtre (2), le corps de filtre (2) séparant un compartiment d'admission de fluide (14) d'un compartiment d'évacuation de fluide (16), et avec un canal de sortie (10) de liquide de rinçage s'étendant le long d'une génératrice du corps de filtre (2), mobile par rapport au corps de filtre (2) et pouvant être mis en liaison d'écoulement avec le corps de filtre (2) sur toute la longueur et sur toute la périphérie de celui-ci par formation d'un courant de liquide de rinçage débouchant dans le canal de sortie (10) de liquide de rinçage, la liaison d'écoulement n'étant toujours réalisée que sur une partie de l'extension longitudinale (20) d'une génératrice du corps de filtre (2), **caractérisé en ce que** le canal de sortie (10) de liquide de rinçage est rendu étanche par des joints (22) par rapport au corps de filtre (2) de part et d'autre de la génératrice le long de laquelle le canal de sortie (10) de liquide de rinçage contacte le corps de filtre (2), **en ce que** le corps de filtre (2) comporte une plaque de pression (6) et une plaque d'appui (7) ainsi qu'un matériau de filtre (8) disposé entre celles-ci, et **en ce que** le corps de filtre (2) est monté de manière rotative par rapport au boîtier fixe (1), une amenée (15) pour le fluide à filtrer dans le boîtier (1) étant dans le sens de rotation (19) du corps de filtre (2) prévue directement contiguë au canal de sortie (10) de liquide de rinçage.

2. Filtre à rétrolavage selon la revendication 1, **caractérisé en ce que** le compartiment d'admission de fluide (14) est formé entre le boîtier (1) et le corps de filtre (2), et le compartiment d'évacuation de fluide (16) est formé à l'intérieur du corps de filtre (2), le canal de sortie (10) de liquide de rinçage étant prévu à l'extérieur du corps de filtre (2).

3. Filtre à rétrolavage selon la revendication 1 ou 2, **caractérisé en ce que** le canal de sortie (10) de liquide de rinçage est formé par un conduit (11) monté de manière rotative autour de son axe longitudinal, lequel est pourvu d'une fente (18) s'étendant sur la paroi du conduit (11) suivant un tracé hélicoïdal et reliant l'intérieur du conduit (11) à l'extérieur de celui-ci, la surface extérieure du conduit (11) contactant le corps de filtre (2) sur toute son extension longitudinale (20).

4. Filtre à rétrolavage selon la revendication 1 ou 2, **caractérisé en ce que** le canal de sortie (10) de liquide de rinçage est formé par un conduit (11) mobile le long de son axe longitudinal, lequel présente une ouverture de rinçage (23) radiale reliant l'intérieur à l'extérieur du conduit, ladite ouverture de rinçage (23) présentant une extension (21) le long de l'axe longitudinal du conduit (11) inférieure à l'extension longitudinale (20) du corps de filtre (2), la surface extérieure du conduit (11) contactant préférentiellement le corps de filtre (2) sur toute son extension longitudinale (20) et l'ouverture de rinçage (23) étant dirigée vers le corps de filtre (2).

5. Filtre à rétrolavage selon l'une des revendications 3 ou 4, **caractérisé en ce qu'**à l'intérieur du corps de filtre (2) est prévu un canal d'amenée (26) de liquide de rinçage vis-à-vis du canal de sortie (10) de liquide de rinçage prévu en dehors du corps de filtre (2), ledit canal d'amenée (26) de liquide de rinçage présentant une fente longitudinale (27) dirigée vers le canal de sortie (10) de liquide de rinçage et s'étendant sur toute l'extension longitudinale (20) du corps de filtre (2).

6. Filtre à rétrolavage selon la revendication 1 ou 2, **caractérisé en ce que** le canal de sortie (10) de liquide de rinçage présente une fente longitudinale (32) qui s'étend sur toute l'extension longitudinale (20) du corps de filtre (2), et **en ce qu'**est prévu un canal d'amenée (26) de liquide de rinçage disposé vis-à-vis du canal de sortie (10) de liquide de rinçage, lequel est formé par un conduit (30) monté de manière rotative autour de son axe longitudinal, pourvu d'une fente (18) s'étendant sur la paroi du conduit (30) suivant un tracé hélicoïdal et reliant l'intérieur du conduit (30) à l'extérieur de celui-ci, la surface extérieure du conduit (30) contactant le corps de filtre (2) sur toute son extension longitudinale (20).

7. Filtre à rétrolavage selon la revendication 1 ou 2, **caractérisé en ce que** le canal de sortie (10) de liquide de rinçage est pourvu d'une fente (32) s'étendant sur toute l'extension longitudinale (20) du corps de filtre (2) et **en ce qu'**un canal d'amenée (26) de liquide de rinçage est prévu vis-à-vis du canal de sortie (10) de liquide de rinçage, lequel est formé par un conduit (11) monté de manière rotative autour de son axe longitudinal, présentant une ouverture de rinçage (23) dirigée radialement vers la fente (32) du canal de sortie (10) de liquide de rinçage et mobile avec cette ouverture de rinçage (23) d'une extrémité du corps de filtre (2) à l'autre extrémité du corps de filtre (2) et au-delà, l'ouverture de rinçage (23) présentant dans la direction de l'axe longitudinal du conduit (11) une extension (21) inférieure à l'extension longitudinale (20) du corps de filtre (2).

8. Filtre à rétrolavage selon l'une des revendications 3 à 7, **caractérisé en ce que** la fente (18) à tracé hélicoïdal est double.

9. Filtre à rétrolavage selon l'une des revendications 1 à 8, **caractérisé en ce que** la partie de la liaison d'écoulement s'étend au maximum sur 20 %, préférentiellement au maximum 5 % de l'extension longitudinale (20) du corps de filtre (2).
